Europäisches Patentamt

European Patent Office

Office européen des brevets

(11) Numéro de publication : **0 297 951 B1**

(12) **FASCICULE DE BREVET EUROPEEN**

(19)

(45) Date de publication du fascicule du brevet :
03.06.92 Bulletin 92/23

(51) Int. Cl.⁵ : **F02D 35/02, F02D 41/14,**
**F02P 17/00**

(21) Numéro de dépôt : **88401554.6**

(22) Date de dépôt : **21.06.88**

(54) **Méthode et dispositif de réglage d'un moteur à allumage commandé à partir de la distribution statistique d'un écartangulaire.**

(30) Priorité : **30.06.87 FR 8709264**

(43) Date de publication de la demande :
**04.01.89 Bulletin 89/01**

(45) Mention de la délivrance du brevet :
**03.06.92 Bulletin 92/23**

(84) Etats contractants désignés :
**DE FR GB IT**

(56) Documents cités :
**GB-A- 2 105 408**

(56) Documents cités :
**US-A- 4 519 366**
**US-A- 4 561 397**
**US-A- 4 562 818**
**PATENT ABSTRACTS OF JAPAN, vol. 10, no.**
**176 (M-491)[2232], 20 juin 1986, page 90 M 491;**
**& JP-A-61 25 951**

(73) Titulaire : **INSTITUT FRANCAIS DU PETROLE**
**4, Avenue de Bois Préau**
**F-92502 Rueil-Malmaison (FR)**

(72) Inventeur : **Lefèbvre, Claude**
**61, avenue de Tobrouk**
**F-78500 Sartrouville (FR)**

## Description

La présente invention concerne une méthode selon la première partie de la revendication 1 permettant le contrôle d'au moins un paramètre conditionnant au moins en partie le fonctionnement d'un moteur à combustion interne à allumage commandé à partir de la détection du front de flamme.

La présente invention est particulièrement bien adaptée pour contrôler la richesse d'un mélange carburant-comburant tel air-essence délivré à un moteur à allumage commandé, cela notamment en mélange pauvre.

En effet actuellement il existe peu de moyens permettant le contrôle du bon fonctionnement d'un moteur à allumage commandé alimenté en mélange pauvre et notamment d'en contrôler la stabilité de combustion et par conséquent la stabilité de fonctionnement

Le document GB-A-2.105.408 décrit un procédé et un dispositif de réglage du début de la combustion grâce à la détection du passage du front de flamme dans un cylindre (avec une soude de ionisation) et grâce au traitement statistique de plusieurs signaux issus de détections successives.

Le document US-A-4.519.366 divulgue un procédé et un dispositif de contrôle de la richesse d'un mélange basé sur un calage par exemple des différences angulaires entre deux cycles de combustion successifs, autour d'une valeur donnée. La présente invention peut également permettre le contrôle de taux de recyclage de gaz d'échappement.

La présente invention fournit de tels moyens.

Ainsi la présente invention concerne une méthode de réglage d'au moins un paramètre conditionnant au moins en partie le fonctionnement d'un moteur à combustion interne à allumage commandé. Selon cette méthode on détecte le passage du front de flamme dans la chambre de combustion d'au moins un cylindre, on détermine l'écart angulaire existant entre une position angulaire de référence et la position angulaire à laquelle se produit la détection du passage de front de flamme. De plus à partir de la distribution ou histogramme provenant de plusieurs de ces écarts angulaires correspondant à un nombre de cycles n prédéterminé, on élabore une grandeur de contrôle du fonctionnement du moteur et en ce qu'on modifie le paramètre conditionnant le fonctionnement du moteur pour que la grandeur de contrôle prenne une valeur prédéterminée.

La position angulaire de référence correspond à l'instant d'excitation de la bougie d'allumage.

Le nombre de cycles pourra par exemple être égal à 32 ou à 64 cycles.

Le paramètre conditionnant au moins en partie le fonctionnement du moteur pourra être lié à la richesse du mélange carburant-comburant fourni au moteur.

La grandeur de contrôle du fonctionnement du moteur correspond à l'évolution d'au moins l'une des valeurs suivantes :
- la valeur moyenne dudit écart angulaire;
- la valeur maximum de la distribution des écarts angulaires;
- la valeur de l'angle au-delà duquel un nombre fixé de détections du front de flamme est effectué.

Lorsque la méthode selon l'invention est appliquée à un moteur comportant plusieurs cylindres, on pourra régler le paramètre pour chacun des cylindres à partir de la détection du front de flamme opérée sur un seul et même cylindre.

De même on pourra régler ce paramètre pour chacun des cylindres à partir de la détection du front de flamme dans chacun des cylindres respectivement.

La présente demande concerne aussi l'utilisation d'un dispositif connu pour la mise en oeuvre de la méthode selon l'invention. Ce dispositif se caractérise en ce qu'il comporte au moins une sonde à ionisation, des moyens de mesure de l'écart angulaire et des moyens de traitement statistique de l'écart angulaire.

La présente invention sera mieux comprise et ses avantages apparaîtront plus clairement à la description qui suit d'exemples plus particulièrement adaptés au réglage de la richesse du mélange air/essence délivré à un moteur à allumage commandé.
- la figure 1 représente le cylindre d'un moteur équipé d'une sonde à ionisation,
- la figure 2 montre un exemple de distribution des écarts angulaires, et
- les figures 3A à 3E montrent l'évolution de la courbe de distribution angulaire en fonction de l'évolution de la richesse carburant/comburant.

Dans l'exemple retenu, on mesure pour un cylindre ou cylindre considéré, et à chaque cycle de celui-ci, l'écart angulaire existant entre une position de référence correspondant à l'instant d'excitation de la bougie d'allumage de ce cylindre, ou instant d'allumage du cylindre considéré, et la détection d'un passage du front de flamme à un endroit prédéterminé de la chambre de combustion où est placée une sonde permettant la détection du front de flamme, telle une sonde à ionisation, un détecteur de température à très faible inertie, etc...

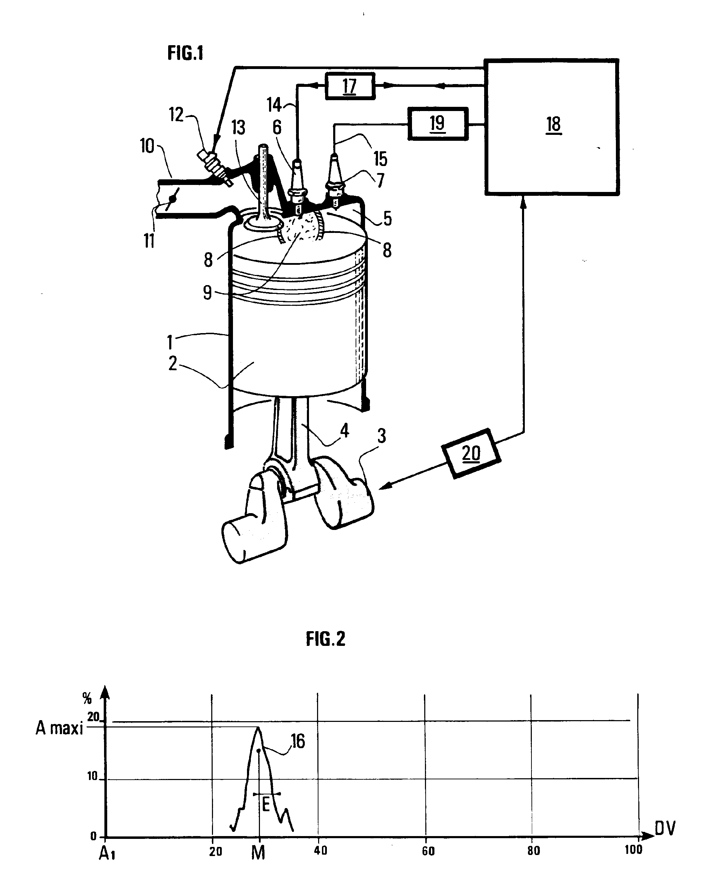

La figure 1 représente un mode de réalisation d'un moteur selon l'invention. Ce moteur comporte un cylindre 1 qui coopère avec un piston 2, ce piston étant lié au vilebrequin 3 par une bielle 4.

La chambre de combustion 5 de ce cylindre comporte une bougie d'allumage 6 et une sonde à ionisation 7, cette dernière permettant la détection du front de flamme schématisé en 8, la zone 9 correspond à la partie de mélange brûlée.

Les références 10, 11, 12 et 13 désignent respectivement la pipe ou tubulure d'admission, le papillon de contrôle du débit de gaz pénétrant dans le moteur, l'injection de carburant et la soupape d'admission.

La référence 14 désigne le fil haut tension d'alimentation de la bougie 6 qui est connecté au système d'allumage 17. Ce système fournissant aux moyens de calcul et de contrôle 18 l'instant d'allumage.

La référence 15 désigne le câble de détection du passage du front de flamme. Le signal de détection est transmis aux moyens de calcul et de contrôle via éventuellement des moyens de traitement analogique 19. Ceux-ci pourront être intégrés aux moyens de calcul et de contrôle 18.

Les moyens de détection du front de flamme, ainsi que les moyens de détection de la position angulaire 20 et de mesure des écarts angulaires ne seront pas décrits en détail dans la présente demande, puisqu'ils sont bien connus de l'homme d'art. On pourra notamment se reporter aux demandes de brevets français FR-2.337.261 et FR-2.432.097.

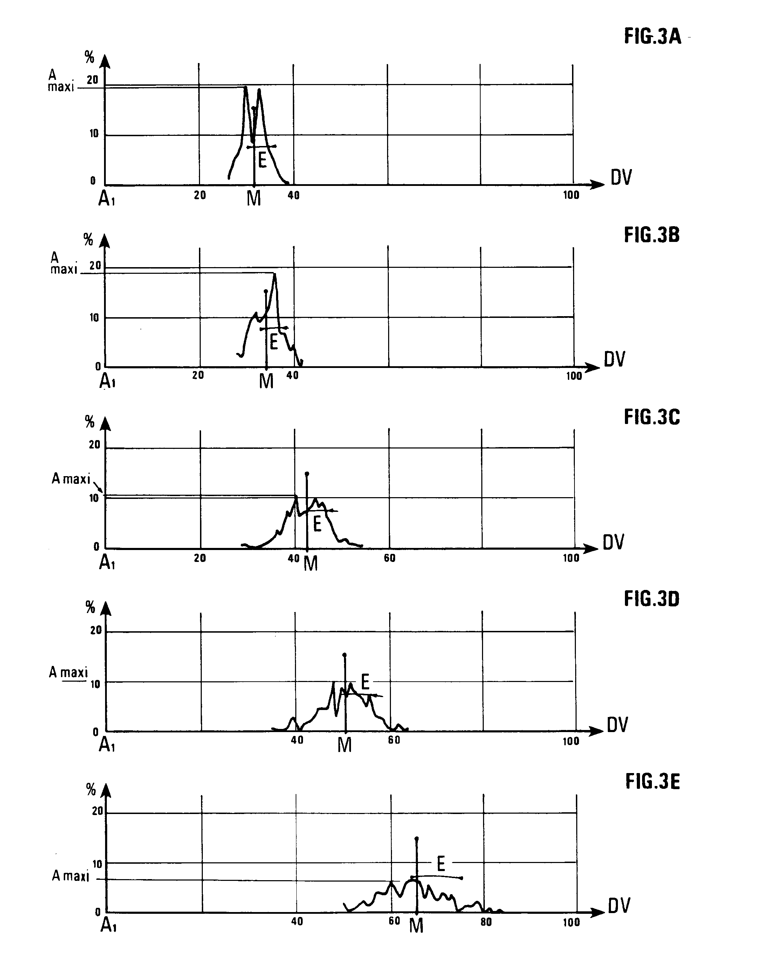

A partir des acquisitions des instants d'allumage et des détections du front de flamme 8 par les sondes à ionisation 7, il est aisé de calculer le temps de propagation de la flamme entre la bougie et la sonde ou l'écart angulaire. On peut aussi, pour un même point de fonctionnement du moteur, reporter sur un graphe la distribution de cet écart angulaire sur un certain nombre de cycles consécutifs d'un même cylindre 1. La figure 2 montre un exemple de cette répartition sur 32 cycles consécutifs, cette répartition étant repérée à partir de l'instant d'allumage A1. Il est rappelé que la détection envisagée est définie par le premier angle d'apparition du front de flamme au droit de la sonde à ionisation 7. En abscisse est porté l'écart angulaire en degrés vilebrequin et en ordonnée le pourcentage d'apparition. La courbe 16 représente la distribution des écarts angulaires. La valeur M représente l'écart angulaire moyen et la valeur du segment E l'écart-type. Sur la figure 3A à 3E, on a reporté les distributions obtenues à couple moteur constant, en fonction de la richesse du mélange carburant/comburant. Les richesses respectives des figures 3A à 3E sont : 0,98 ; 0,91 ; 0,81 ; 0,75 ; 0,66.

Sur les figures 3A à 3E, la référence A1 indique l'instant d'allumage ; les références M et E la moyenne et l'écart type respectivement.

On s'aperçoit sur ces figures qu'au fur et à mesure que la richesse décroit, la distribution des écarts angulaires se décale vers les abscisses croissants, comme cela a été constaté pour de nombreuses charges et régimes.

De même on constate que le point maximum diminue au fur et à mesure que la richesse diminue.

On note aussi que l'écart-type E augmente, alors que la richesse diminue.

On remarque également que la distribution des écarts angulaires s'étale de plus en plus lorsque la richesse diminue.

En effet sur la figure 3A la distribution occupe une quinzaine de degrés vilebrequin, alors que sur la figure 3E elle occupe une trentaine de degrés vilebrequin.

Ainsi il apparaît clairement qu'à partir de la distribution des écarts angulaires on peut élaborer plusieurs grandeurs permettant de rendre compte des conditions de fonctionnement du moteur.

Ainsi, parmi les grandeurs susceptibles d'être utilisées, on peut indiquer les grandeurs suivantes :

1. Evolution de la valeur moyenne de la distribution des signaux de sonde (M).

2. Evolution de l'écart-type de la moyenne définie ci-dessus (E)

3. Evolution de la valeur maximum de la distribution des signaux de sonde (A MAXI).

4. Evolution de la valeur de la distribution des signaux de sonde (exprimée en pourcentage de détection par exemple) à certains angles fixes, par exemple à 40°, correspondant à la fréquence pour un angle donné.

5. Evolution de l'étalement angulaire de la distribution des signaux de sonde.

6. Evolution de l'angle (l'origine étant l'instant d'allumage) au-delà duquel un nombre fixé de détections apparaît, par exemple évolution de l'angle au-delà duquel on a l'apparition d'une et d'une seule détection.

Il faut bien noter que, dès lors, les possibilités de choix d'un critère deviennent nombreuses. En effet, on peut imaginer toutes sortes de combinaisons des évolutions des différents paramètres, ainsi que de leurs éléments statistiques. Dans un premier temps, on peut retenir la variation d'un seul paramètre qui sera éventuellement complété par d'autres informations, si cela s'avère nécessaire, lors de la mise au point du moteur.

La dernière grandeur numérotée 6 offre une bonne sensibilité de la détection, notamment en prenant en compte l'écart angulaire au-delà duquel on a l'apparition d'une seule détection.

De bons résultats ont été obtenus grâce à cette configuration en fixant une fenêtre angulaire de 75° vilebrequin à partir de l'instant d'allumage avec une distribution faisant appel à 32 cycles successifs.

Par fenêtre angulaire on entend l'intervalle angulaire commençant à l'instant ou angle d'allumage et qui se termine ou se ferme à un angle vilebrequin donné ou, ce qui est équivalent, qui a une amplitude angulaire donnée, dans l'exemple qui précède il s'agit d'une amplitude angulaire de 75°.

Cette configuration peut être mise en oeuvre en définissant une fenêtre angulaire à la suite d'essais de mise au point et ensuite en agissant sur la richesse pour que, par exemple, sur 32 détections sucessives il y en ait une seule qui soit à l'extérieur.

S'il n'y en a aucune, on pourra appauvrir le mélange, s'il y en a plusieurs il faudra l'enrichir.

Ceci n'est nullement limitatif et le nombre de détections effectuées au delà d'une fenêtre angulaire donnée peut être différent de 1.

Des essais ont donnés des résultats satisfaisants, notamment, en considérant 6 détections pour une fenêtre angulaire de 60°. Par ailleurs une telle configuration permet de mieux apprécier l'éloignement de paramètres réels de fonctionnement du moteur par rapport aux réglages souhaités et d'atteindre ceux-ci rapidement. Ainsi si le nombre de détections au-delà de la fenêtre angulaire de 60° est nul on pourra faire varier rapidement le réglage de moteur (par exemple appauvrir de manière importante le mélange délivré au moteur). Dès la première détection au-delà de cette fenêtre angulaire on réduira la vitesse de réglage du moteur (par exemple on appauvrira plus lentement le mélange) de manière à mieux maîtriser l'approche des paramètres de réglage souhaités.

Afin d'éviter les phénomènes de pompage autour des points de fonctionnement souhaités du moteur, on pourra introduire des intervalles ou fourchettes de valeurs, par exemple sur le nombre de détections, les fenêtres angulaires introduisant ainsi un effet d'hystérésis.

Ainsi dans l'exemple mentionné, précédemment on pourra considérer que le réglage souhaité est atteint s'il se produit entre 4 et 6 détections après la fenêtre angulaire de 60° vilebrequin ou par exemple si l'on avait 6 détections après l'une au moins des fenêtres angulaires dont la fermeture est comprise entre 58 et 62° vilebrequin.

La mise en oeuvre de la méthode selon la présente invention peut s'effectuer notamment par l'utilisation de composants électroniques, par exemple à l'aide d'un microprocesseur du type "Monochip Intel 8751 H".

Les essais ont montré que les signaux produits par la sonde à ionisation se dégradent lorsque la richesse diminue et qu'il convient de réduire au minimum le traitement analogique de ces signaux. Il est recommandé d'utiliser des comparateurs.

On ne sortira pas du cadre de la présente invention si le système de calcul et de contrôle règle simultanément plusieurs paramètres de fonctionnement du moteur par exemple et de manière nullement limitative la richesse du mélange fourni au moteur et l'instant d'allumage.

## Revendications

1. Méthode de réglage d'au moins un paramètre conditionnant au moins en partie le fonctionnement d'un moteur à combustion interne à allumage commandé, dans laquelle on détecte le passage du front de flamme sur au moins un cylindre, on détermine l'écart angulaire existant entre une position angulaire de référence et la position angulaire à laquelle se produit la détection du passage de front de flamme, puis, à partir de la distribution provenant de plusieurs de ces écarts angulaires correspondant à un nombre de cycles n prédéterminé, on élabore une grandeur de contrôle du fonctionnement du moteur et on modifie le paramètre conditionnant le fonctionnement du moteur pour que la grandeur de contrôle prenne une valeur prédéterminée, caractérisé en ce que ladite position angulaire de référence correspond à l'instant d'excitation de la bougie d'allumage, ladite grandeur de contrôle correspond à l'évolution d'au moins l'une des valeurs suivantes :
   – la valeur moyenne dudit écart angulaire;
   – la valeur maximum de la distribution des écarts angulaires; ou
   – la valeur de l'angle au-delà duquel un nombre fixé de détections du front de flamme est effectué.

2. Méthode selon la revendication 1, caractérisée en ce que le nombre de cycles est égal à 32.

3. Méthode selon l'une des revendications 1 et 2, caractérisée en ce que ledit paramètre est lié à la richesse du mélange carburant-comburant fourni au moteur.

4. Méthode selon l'une des revendications précédentes appliquée à un moteur comportant plusieurs cylindres, caractérisée en ce qu'on règle ledit paramètre pour chacun des cylindres à partir de la détection du front de flamme opérée sur un seul et même cylindre.

5. Méthode selon l'une des revendications 1 à 3 appliquées à un moteur comportant plusieurs cylindres, caractérisée en ce qu'on règle ledit paramètre pour chacun des cylindres à partir de la détection du front de flamme dans chacun des cylindres respectivement.

6. Méthode selon la revendication 1, caractérisée elle est mise en oeuvre avec au moins une sonde à ionisation, des moyens de mesure dudit écart angulaire et des moyens de traitement statistique de l'écart angulaire.

## Patentansprüche

1. Verfahren zur Einstellregelung wenigstens eines Parameters, der wenigstens zum Teil die Arbeitsweise einer Brennkraftmaschine mit Fremdzündung bestimmt, bei dem man den Durchgang der Flammenfront an wenigstens einem Zylinder detektiert, man die Winkelabweichung bestimmt, die zwischen einer Bezugswinkelstellung und der Winkelstellung existiert, bei der die Ermittlung des Durchgangs der Flammenfront vorgenommen wird, dann ausgehend von der Verteilung, die aus mehreren dieser Winkelabweichungen entsprechend einer Anzahl bestimmter Zyklen n stammt, erarbeitet man eine Regelgröße für die Funktionsweise des Motors und modifiziert den die Arbeitsweise des Motors bestimmenden und regelnden Parameter, damit die Regelgröße einen vorbestimmten Wert annimmt, dadurch **gekennzeichnet** , daß diese Bezugswinkelstellung dem Augenblick der Erregung der Zündkerze entspricht und daß diese Regelgröße der Entwicklung wenigstens eines der folgenden Werte entspricht:
    – dem mittleren Wert dieser Winkelabweichung;
    – dem Maximalwert der Verteilung der Winkelabweichungen; oder
    – dem Wert des Winkels oberhalb dessen eine festgelegte Anzahl von Ermittlungen der Flammenfront vorgenommen wird.

2. Verfahren nach Anspruch 1, dadurch **gekennzeichnet**, daß die Anzahl der Takte gleich 32 beträgt.

3. Verfahren nach einem der Ansprüche 1 und 2, dadurch **gekennzeichnet**, daß dieser Parameter mit der Reichheit des dem Motor gelieferten Brennstoff-Sauerstoffträgergemisches verknüpft ist.

4. Verfahren nach einem der vorhergehenden Ansprüche in Anwendung auf einen Motor mit mehreren Zylindern, dadurch **gekennzeichnet**, daß man diesen Parameter für jeden der Zylinder ausgehend von der an ein und demgleichen Zylinder vorgenommenen Ermittlung der Flammenfront einstellregelt.

5. Verfahren nach einem der Ansprüche 1 bis 3 in Anwendung auf einen mehrzylindrigen Motor, dadurch **gekennzeichnet**, daß man diesen Parameter für jeden der Zylinder ausgehend von der Ermittlung der Flammenfront in jeweils jedem der Zylinder einstellregelt.

6. Verfahren nach Anspruch 1, dadurch **gekennzeichnet** , daß es durchführbar ist mit wenigstens einer Ionisationssonde, Meßeinrichtungen für diese Winkelabweichung sowie Einrichtungen zur statistischen Behandlung der Winkelabweichung.

**Claims**

1. Method for controlling at least one parameter conditioning at least partially the operation of a controlled ignition internal combustion engine, in which the passage of the front of the flame on at least one cylinder is detected, the angular divergence between a reference angular position and the angular position at which the detection of the passing of the front of the flame is determined and in which, the distribution of several of these angular variances corresponding to a predetermined number of cycles n is used to work out a value for controlling the operation of the engine so that the control value assumes a predetermined value, characterised in that the reference angular position corresponds to the instant of activation of the spark plug, whereby the control value corresponds to changes in at least one of the following values:
    – the average value of the angular variance;
    – the maximum value of the distribution of the angular variances; or

– the value of the angle above which the front of the flame is detected a fixed number of times.

2. Method in accordance with claim 1, characterised in that the number of cycles is equal to 32.

3. Method in accordance with one of claims 1 and 2, characterised in that the parameter is linked to the richness of the fuel-oxidant mixture fed to the engine.

4. Method in accordance with one of the preceding claims applied to an engine with several cylinders, characterised in that the parameter is adjusted for each cylinder on the basis of the detection of the front of the flame on one and the same cylinder.

5. Method in accordance with one of claims 1 to 3 applied to an engine having several cylinders, characterised in that the parameter is adjusted for each cylinder on the basis of the detection of the front of the flame in each of the cylinders respectively.

6. Method in accordance with claim 1, characterised in that implementation is by means of at least one ionisation probe, means for measuring the angular variance and means for statistical processing of the angular variance.

**FIG.1**

**FIG.2**

**FIG.3A**

**FIG.3B**

**FIG.3C**

**FIG.3D**

**FIG.3E**